# EUROPÄISCHE PATENTSCHRIFT

(11) **EP 3 009 694 B1**
(45) Veröffentlichungstag und Bekanntmachung des Hinweises auf die Patenterteilung: **06.03.2019**
(21) Anmeldenummer: 15187911.1
(22) Anmeldetag: 01.10.2015
(51) Int. Cl.: F16B 13/12, F16B 19/10, F16B 21/08

(54) **BEFESTIGUNGSELEMENT UND BAUGRUPPE AUS BEFESTIGUNGSELEMENT UND AUFNAHMEELEMENT**
FASTENING ELEMENT AND ASSEMBLY OF FASTENING ELEMENT AND HOLDING ELEMENT
ÉLEMENT DE FIXATION ET GROUPE D'ELEMENT DE FIXATION ET ELEMENT DE RECEPTION

(30) Priorität: 17.10.2014 DE 102014115186
(43) Veröffentlichungstag der Anmeldung: 20.04.2016
(73) Patentinhaber: Illinois Tool Works Inc., Glenview, IL 60025 (US)
(72) Erfinder: Zajak, Martin, 67657 Kaiserslautern (DE); Loewe, Hubert, 66919 Weselberg (DE)
(74) Vertreter: Trinks, Ole

(56) Entgegenhaltungen:
- DE-A1- 19 543 651
- DE-A1-102006 007 382
- US-A- 3 921 496
- US-A- 5 110 246

## Beschreibung

Die Erfindung betrifft ein Befestigungselement mit einem Führungskörper, der dazu dient, in einer Aufnahme aufgenommen zu werden, und mit mindestens einer Klemmlasche, die am Führungskörper angeordnet ist und eine Außenkante aufweist, die dafür vorgesehen ist, mit der Innenfläche der Aufnahme zusammenzuwirken, wobei die Außenkante der Klemmlasche sich schräg zu einer Ebene erstreckt, die senkrecht auf der Mittelachse des Führungskörpers steht. Die Erfindung betrifft weiterhin eine Baugruppe mit einem solchen Befestigungselement und einem Aufnahmeelement.

Häufig werden in Kraftfahrzeugen verschiedene Halteelemente wie Verkleidungsbauteile, Dämmungselemente oder Kabel an einer Trägerstruktur mit Befestigungselementen befestigt. Diese können einen Führungskörper aufweisen, mit dem sie in eine Öffnung der Trägerstruktur eingeführt werden, und ein Klemmelement, das mit dem Einführen in die Öffnung das Befestigungselement dort festklemmt. Die Öffnung kann beispielsweise als Sackloch ausgeführt sein.

Die Klemmwirkung des Klemmelements wirkt selbstverstärkend, sodass bei dem Versuch, das Befestigungselement durch Herausziehen des Führungskörpers aus dem Sackloch zu demontieren, die der Demontage entgegenwirkende Klemmkraft weiter verstärkt wird. Entweder kann das Befestigungselement gar nicht aus dem Sackloch herausgezogen werden, oder es kann durch Aufbringen hoher Kräfte gewaltsam herausgezogen werden, wobei dabei die Innenfläche des Sacklochs durch das Klemmelement beschädigt wird.

Eine solche Beschädigung der Innenfläche des Sacklochs verschlechtert jedoch die Klemmwirkung, wenn in demselben Sackloch wiederum dasselbe oder ein gleichartiges Befestigungselement angebracht werden soll, um beispielsweise ein auszutauschendes Kabel oder Verkleidungsteil zu befestigen.

Ein Befestigungselement der eingangs genannten Art ist aus der DE 10 2013 219 797 A1 bekannt. Es weist Klemmlaschen mit schräg angeordneten Außenkanten auf, die als Krallzungen ausgeführt sind.

Befestigungselemente der eingangs genannten Art sind weiterhin aus der DE 10 2009 024 983 B4 und der US 2005 0 220 560 A1 bekannt.

In der DE 195 43 651 A1 sowie der US 3 921 496 A ist jeweils ein spreizbares Befestigungselement gezeigt, das an seiner äußeren Kontur ein Schraubengewinde aufweist, mittels dem es aus einer Aufnahme herausgeschraubt werden kann.

In der US 5 110 246 A ist ein Befestigungselement mit Klemmlaschen gezeigt, die eine Gewindewirkung erzeugen, welche es erlaubt, das Befestigungselement durch Schrauben zu entfernen.

In der DE 10 2006 007 382 A1 ist eine lösbare Clipverbindung mit einer V-förmigen Blattfeder gezeigt, die eine Entkopplung von Montagekraft und Demontagekraft ermöglicht.

Aufgabe der Erfindung ist daher, ein Befestigungselement zur Verfügung zu stellen, das weitgehend zerstörungsfrei demontiert und wieder montiert werden kann.

Zur Lösung dieser Aufgabe ist erfindungsgemäß bei einem Befestigungselement der eingangs genannten Art vorgesehen, dass die Schrägstellung der Außenkante derart ist, dass die Klemmlasche eine Art Gewindewirkung erzeugt, mit der das Befestigungselement aus einer Aufnahme herausgeschraubt werden kann, und dass wenigstens eine, insbesondere zwei, Klemmlaschen Teil einer Federklammer sind, die am Führungskörper angebracht ist. Die Erfindung beruht auf dem Grundgedanken, dass die Klemmlasche Teil eines virtuellen Gewindegangs ist, so dass sie das Befestigungselement aus dem Sackloch herausschrauben kann, wenn die beiden Teile relativ zueinander verdreht werden. Durch eine Drehung des Befestigungselements um die Mittelachse kann so über die von den Klemmlaschen auf die Innenfläche der Aufnahme einwirkende Klemmkraft eine - der Einführungsrichtung des Führungskörpers entgegenwirkende - Kraft auf den Führungskörper aufgebracht werden. Die Drehung um die Mittelachse muss in diejenige Richtung erfolgen, in welcher die Schrägstellung der Außenkante der Klemmlasche eine Windung entgegen der Einführungsrichtung des Führungskörpers erzeugt, und führt dann zu einem Herausdrehen der Klemmlasche und damit des Befestigungselements aus der Aufnahme. Vorzugsweise ist die Federklammer U-förmig ausgeführt und weist je eine Klemmlasche an den freien Enden ihrer beiden Schenkel auf, wobei die Klemmlaschen schräg nach außen abstehen. Dadurch kann mit einer einfachen Lösung an der/den Klemmlasche/n eine ausreichend starke Klemmkraft aufgebracht werden, indem die Federklammer so ausgebildet ist, dass in einem nicht montierten Zustand des Befestigungselements die Klemmlasche mehr als den Radius der Aufnahme von deren Mittelachse entfernt angeordnet ist. So wird bei der Einführung des Führungskörpers in die Aufnahme die Federklammer radial bezüglich der Mittelachse zusammengedrückt und damit elastisch verformt, wodurch eine der elastischen Verformung entgegenwirkende Federkraft als Klemmkraft an den Außenkanten der Klemmlasche/n anliegt und auf die Innenfläche der Aufnahme übertragen wird. Die Verwendung eines separaten Bauteils für die Klemmlaschen ermöglicht es, hierfür ein geeignetes Material zu verwenden, beispielsweise Federstahl, während der Führungskörper aus Kostengründen weiterhin aus Kunststoff ausgeführt ist.

Hierdurch ist eine zerstörungsfreie Demontage des Befestigungselements möglich. Die einzige Folge der Demontage ist ein eventuell beim Herausdrehen in die Innenfläche der Aufnahme eingeschnittenes Gewinde. Dieses stellt allerdings bei einer erneuten Montage eines Befestigungselements kein Problem dar. Zudem kann durch das Übersetzungsverhältnis des mit der Klemmlasche gebildeten Gewindes das Befestigungselement mit deutlich weniger Kraftaufwand vom Sackloch gelöst werden, als dies beim direkten Herausziehen bekannter Befestigungselemente der Fall ist.

Zur Unterstützung des Herausdrehens des Befestigungselements aus der Aufnahme sind an einem Anschlussteil des Befestigungselements vorzugsweise Werkzeugangriffsflächen vorgesehen. Somit können ein Schraubenschlüssel oder eine Zange angesetzt werden, wodurch das Herausdrehen des Befestigungselements weiter erleichtert wird.

Gemäß einer bevorzugten Weiterbildung sind zwei Klemmlaschen vorgesehen, die einander bezüglich des Führungskörpers diametral gegenüberliegen: Dies verhindert ein Verkeilen des Führungskörpers, da mit den beiden Klemmlaschen gewährleistet ist, dass die auftretenden Klemmkräfte symmetrisch zueinander sind. Die beiden Klemmlaschen sind vorzugsweise in ihrer Schrägstellung aufeinander abgestimmt, d.h. entlang des Umfangs der Innenfläche der Aufnahme gesehen ist die Schrägstellung beider Klemmlaschen identisch orientiert und weist besonders bevorzugt einen im Wesentlichen identischen Winkelbetrag auf, damit die bei einer Drehung des Befestigungselements durch jede Klemmlasche auf den Führungskörper aufgebrachte Kraft entlang der Mittelachse in die gleiche Richtung wirkt. Insbesondere sind beide Klemmlaschen derart schräg gestellt, dass bei einer Drehung das durch die Schrägstellung tiefer im Sackloch angeordnete Ende jeder Außenkante im Sinne der Drehung vorne angeordnet ist. Die Drehung zur Demontage erfolgt in unterschiedlichen Ausführungsformen entweder im Uhrzeigersinn oder gegen den Uhrzeigersinn.

Gemäß einer bevorzugten Weiterbildung ist wenigstens eine, insbesondere jede, Klemmlasche eben und so schräg ausgerichtet, dass sich die Außenkante in Einschubrichtung am Führungskörper hinten befindet, wodurch der notwendige Drehweg zur Demontage des Befestigungselements minimiert wird. Im Sinne dieser Weiterbildung ist eine Außenkante vorzugsweise dann am Führungskörper hinten angeordnet, wenn sie sich im montierten Zustand des Befestigungselements nicht mehr als ein Drittel der Erstreckung des Führungskörpers innerhalb der Aufnahme befindet.

Vorzugsweise ist die Federklammer in einer Klammeraufnahme angeordnet, die durch einen Mittelsteg des Führungskörpers und seitlich davon angeordnete Wandabschnitte des Führungskörpers begrenzt ist, was eine einfache Montage der Federklammer an dem Führungskörper sowie eine einfache gemeinsame Montage der dabei entstehenden Baugruppe in die Aufnahme ermöglicht. Zudem legt eine solche Ausbildung der Klammeraufnahme die Federklammer wenigstens im wesentlichen drehfest und formschlüssig entgegen der Einführungsrichtung an dem Führungskörper fest, wodurch eine Übertragung von Drehbewegungen des Führungskörpers auf die Federklammer und damit auf die Klemmlaschen ebenso sichergestellt ist wie ein Herausdrehen des Führungskörpers mit der Federklammer.

Damit eine zuverlässige Vormontage der Federklammer an dem Führungskörper stattfinden kann, weist die Klammeraufnahme in einer bevorzugten Weiterbildung wenigstens eine Spreizfläche auf, die mit der Federklammer im Bereich der beiden Klemmlaschen zusammenwirken kann. In einer weiter bevorzugten Ausführungsform ist dabei der Übergang zwischen den freien Enden der beiden Schenkel der Federklammer und den Klemmlaschen nach innen eingezogen ausgeführt, um eine formschlüssige Vormontage der Federklammer an dem Führungskörper zu ermöglichen. Die Spreizfläche verstärkt auch beim Versuch, das Befestigungselement aus dem Sackloch herauszuziehen, die Klemmwirkung, da sie die Klemmlasche radial nach außen und somit gegen die Innenfläche des Sacklochs beaufschlagen.

Um mit dem Befestigungselement verschiedene Fahrzeugkomponenten wie beispielsweise Verkleidungsteile, Dämmungsteile oder Kabel an der Trägerstruktur mit einer Aufnahme für das Befestigungselement befestigen zu können, hat dieses in einer bevorzugten Weiterbildung ein Anschlusselement, welches vorzugsweise mit dem Führungskörper verbunden ist und besonders bevorzugt einen Kabelbinder, einen Clipmechanismus und/oder einen Bracketmechanismus aufweist.

Zur Lösung der oben genannten Aufgabe ist erfindungsgemäß auch eine Baugruppe aus einem erfindungsgemäßen Befestigungselement und einem Aufnahmeteil vorgesehen, wobei das Aufnahmeteil mit einer Aufnahme versehen ist, in der der Führungskörper des Befestigungselements so angeordnet ist, dass die Außenkante der Klemmlasche an der Innenfläche der Aufnahme anliegt, so dass sich bei einer Drehung des Befestigungselements relativ zur Aufnahme eine Art Gewindewirkung ergibt, mit der das Befestigungselement aus der Aufnahme herausgeschraubt werden kann. Dadurch kann ein Herausdrehen des Befestigungselements aus der Aufnahme ermöglicht werden.

Vorzugsweise ist das Aufnahmeteil als Sackloch in einer Trägerstruktur, insbesondere eines Kraftfahrzeuges, ausgebildet. Solche Trägerstrukturen können beispielsweise Chassiselemente, Längs- oder Querträger, Karosseriebauteile oder beliebige andere Komponenten eines Kraftfahrzeuges sein, an welchen Halteteile wie Verkleidungselemente, Dämmelemente oder Kabel angeordnet werden sollen.

Gemäß einer bevorzugten Weiterbildung der Baugruppe ist das Material der Klemmlasche zumindest im Bereich der Außenkante härter als das Material der Innenfläche der Aufnahme, wodurch die Zuverlässigkeit der Ausbildung eines Gewindes in der Innenfläche der Aufnahme verstärkt wird, was zu einem einfacheren Herausdrehen des Befestigungselements aus der Aufnahme führen kann. Vorzugsweise ist jede Klemmlasche und besonders bevorzugt auch die Federklammer mit einem Metallwerkstoff, insbesondere einem Federstahl, ausgebildet.

Vorteilhafte Ausgestaltungen der Erfindung ergeben sich aus den Unteransprüchen.

Beispielhafte Ausführungen der Erfindung ergeben sich aus den nachfolgenden Beschreibungen in Zusammenhang mit den Figuren, welche im Einzelnen - wenigstens teilweise schematisiert - zeigen:
- Figur 1 die Komponenten eines Befestigungselements gemäß einer Ausführung der Erfindung in einer perspektivischen Ansicht;
- Figur 2 eine Baugruppe gemäß einer Ausführung der Erfindung mit den vormontierten Komponenten des Befestigungselements aus Figur 1 und einem Aufnahmeteil in einer perspektivischen Ansicht;
- die Figuren 3 a und 3b die montierte Baugruppe aus Figur 2 in zwei rechtwinklig zueinander versetzten Schnittansichten; und
- Figur 4 eine weitere Baugruppe gemäß einer Ausführung der Erfindung mit einem Kabelbinder in einer Draufsicht und einer Schnittansicht.

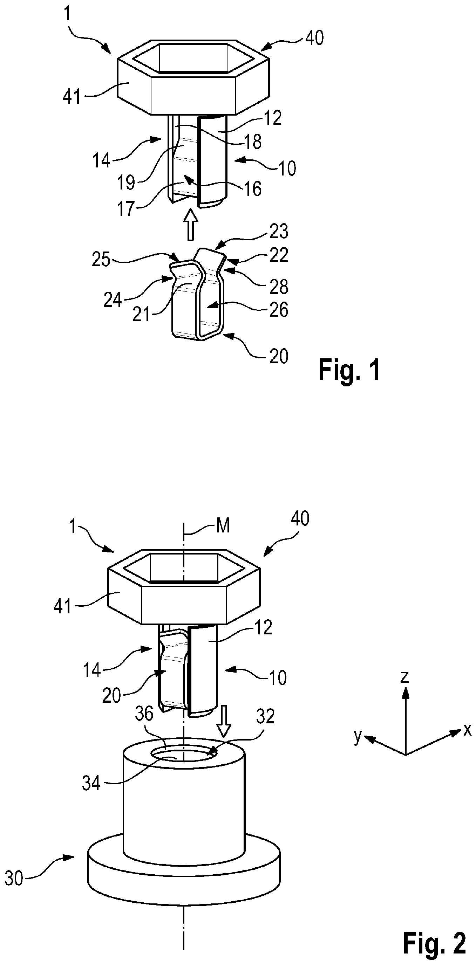

In den Figuren ist eine Baugruppe gezeigt, die als wesentliche Bestandteile ein Befestigungselement 1 und ein Aufnahmeteil 30 aufweist. Das Aufnahmeteil 30 kann als ortsfest angenommen werden, beispielsweise als fest verbunden mit einem Träger, und das Befestigungselement 1 kann in das Aufnahmeteil 30 eingesetzt werden (siehe Figur 2), so dass es darin befestigt ist.

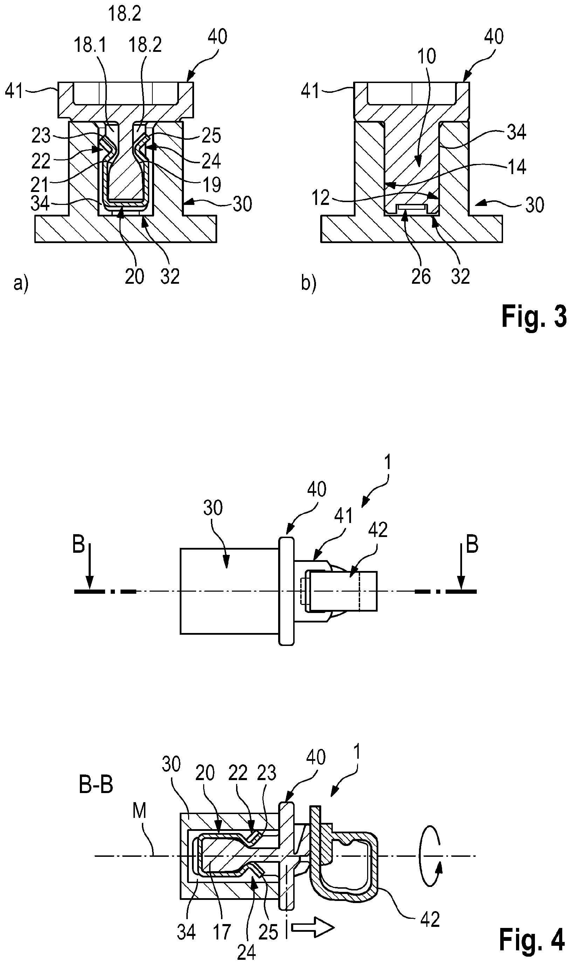

Am Befestigungselement 1 können verschiedene Bauteile festgelegt sein, die am Träger befestigt werden sollen. Dies können Kabel sein, die über einen Kabelhalter 42 (siehe Figur 4) am Träger fixiert werden sollen. Mit dem Befestigungselement können die verschiedensten Komponenten insbesondere in Kraftfahrzeugen angebracht werden, beispielsweise Verkleidungsteile, Leitungen, Schläuche, etc.

Das Befestigungselement 1 weist einen Führungskörper 10 auf, der dazu dient, in die Aufnahme 30 eingesetzt zu werden. Mit dem Führungskörper 10 einstückig verbunden ist ein Anschlussteil 40, welches auf seiner Außenseite mehrere Werkzeugangriffsflächen 41 aufweist, an denen ein Schraubenschlüssel, eine Zange oder ein anderes Werkzeug angesetzt werden kann. Am Anschlussteil 40 ist der nur in Figur 4 gezeigte Kabelbinder 42 angebracht.

Bas Befestigungselement mit dem Führungskörper 10 und dem Anschlussteil 40 ist im Ausführungsbeispiel aus einem Kunststoffmaterial ausgebildet, beispielsweise als einstückiges Spritzgussteil.

Der Führungskörper 10 weist eine erste Umfangsfläche 12 und eine zweite Umfangsfläche 14 auf, die bezüglich der Mittelachse M diametral auf einem identischen Radius angeordnet sind. Zudem ist der Führungskörper 10 mit einer Klammeraufnahme 16 ausgebildet, die zum Halten einer Federklammer 20 dient.

Die Klemmaufnahme 16 weist als Boden einen Mittelsteg 17 und als seitliche Begrenzung Wandabschnitte 18 auf.

Der Mittelsteg 17 hat entlang seines Verlaufs eine unterschiedliche Wandstärke. Am freien, vorderen Ende des Führungskörpers 10 hat er die größte Wandstärke. Etwa im Bereich der Mitte des Führungskörpers sind zwei Spreizflächen 19 vorgesehen, die schräg aufeinander zu verlaufen, so dass sich dort die Wandstärke des Mittelstegs 17 verringert. Im restlichen Bereich zum Anschlussteil 40 hin verläuft die Wandstärke konstant auf einem gegenüber dem vorderen Bereich verringerten Wert. Der Verlauf der Wandstärke ist am besten in Figur 3a zu sehen.

Die Federklammer 20 (siehe insbesondere die Figuren 1 und 3a) besteht aus Federstahl und hat eine allgemein U-förmige Gestalt. Zu den freien Enden hin ist jeder Schenkel der U-förmigen Federklammer 20 mit einem einwärts gebogenen Abschnitt 21 versehen, so dass gegenüber dem näher zum Boden angeordneten Innenbereich eine Einschnürung oder Verengung 28 gebildet ist.

Am freien Ende jedes Abschnittes 21 ist eine Klemmlasche 22 angeordnet, die sich schräg nach außen und vom Boden der Federklammer 20 weg erstreckt. Das freie Ende jeder Klemmlasche 22 bildet eine Klemmkante 23, die weiter außen liegt als die Schenkel des U der Federklammer 20.

Die Klemmlaschen 22 sind zusätzlich zu ihrer Schrägstellung relativ zu einer radial verlaufenden Ebene auch relativ zu einer Umfangsrichtung schräg angestellt. Dies ist in den Figuren 1 und 3a gut zu sehen. Eines der Enden jeder Klemmkante 23 ist näher am Boden der U-förmigen Federklammer 20 angeordnet als das andere Ende. Somit verläuft jede Klemmkante relativ zur Mittelachse des Befestigungselement 1 mit einer Steigung, ähnlich einem Gewindegang.

Die Federlasche 20 ist am Führungskörper 10 so montiert, dass sie in der Klemmaufnahme 16 liegt. Hierzu wird sie in der Richtung des Pfeils von Figur 1 in die Klemmaufnahme 16 eingeschoben. Die Klemmlaschen 22 dienen dabei als Einführschräge, so dass die Federklammer 20 zunächst aufgeweitet wird. Sobald die Einschnürung oder Verengung 28 über den ersten Abschnitt des Mittelstegs gerutscht ist, der die größte Wandstärke hat, schnappen die Abschnitte 21 der Federklammer 20 elastisch "hinter" den Spreizflächen 19 ein (siehe den in Figur 3 gezeigten Zustand), so dass die Federklammer auf dem Mittelsteg 17 gehalten ist.

In dem vormontierten Zustand des Befestigungselements 1 sind die Außenkanten 23 und 25 der ersten und zweiten Klemmlasche 22 und 24 radial weiter von der Mittelachse M entfernt als die Umfangsflächen 12 und 14 des Führungskörpers und weisen auch eine größere Entfernung von der Mittelachse M auf als die Innenfläche 34 der Aufnahme 32.

Das Aufnahmeteil 30 weist eine Aufnahme 32 auf, die hier als zylindrische Öffnung oder Sackloch ausgeführt ist und eine Innenfläche 34 aufweist. Grundsätzlich kann auch eine Durchgangsöffnung verwendet werden.

Wichtig ist, dass die Abmessungen der Innenfläche, insbesondere ihr Innendurchmesser, und der Abstand der Klemmkanten 23 voneinander so gewählt sind, dass die Klemmkanten im Ausgangszustand einen Abstand voneinander haben, der etwas größer ist als der Innendurchmesser der Innenfläche 34.

Um das Befestigungselement 1 im Aufnahmeteil 30 zu befestigen, wird das Befestigungselement 1 in Richtung des in Figur 2 nach unten eingezeichneten Pfeils in die Aufnahme 30 eingeführt. Dabei wird die Federklammer 20 an ihrer ersten und zweiten Klemmlasche 22 und 24 elastisch in Richtung der Mittelachse M verformt, um in der Aufnahme 32 aufgenommen werden zu können. Durch diese elastische Verformung bringen die Klemmlaschen 22 und 24 an ihren Außenkanten 23 und 25 stetig eine zu der Verformung proportionale Radialkraft auf die Innenfläche 34 der Aufnahme 32 auf.

Der Führungskörper 10 kann zu Beginn des Montagevorgangs durch ein Ausrichten seiner abschließenden Fase mit der Fase 36 der Aufnahme 32 auf eine gemeinsame Mittelachse M mit dem Aufnahmeteil 30 ausgerichtet werden. Während des weiteren Montagevorgangs wird die Einführbewegung durch ein Zusammenwirken der Umfangsflächen 12 und 14 mit der Innenfläche 34 der Aufnahme 32 geführt, bis der Führungskörper 10 bis zu einem Anschlag an dem Anschlusselement 40 in die Aufnahme 32 eingeführt ist.

Die Figuren 3a und 3b zeigen die montierte Baugruppe aus Figur 2 in zwei rechtwinklig zueinander versetzten Schnittansichten. Figur 3a stellt dabei einen durch die Mittelachse M verlaufenden Schnitt durch eine x-z-Ebene gemäß dem in Figur 2 eingezeichneten Koordinatensystem dar, Figur 3b einen durch die Mittelachse M verlaufenden Schnitt durch eine y-z-Ebene in diesem Koordinatensystem.

Aus Figur 3a ist insbesondere ersichtlich, dass die Federklammer 20 nach oben formschlüssig mit dem Mittelsteg 17 der Klammeraufnahme 16 verbunden ist und seitlich an den Wandabschnitten 18 der Klammeraufnahme 16 anliegt.

Im in den Figuren 3a und 3b gezeigten Zustand kann das Befestigungselement 1 nicht in axialer Richtung aus dem Aufnahmeteil 30 herausgezogen werden. Eine axiale Zugkraft wird über die Spreizflächen 19 auf die Federklammer 20 und genauer gesagt auf die Klemmlaschen 22 übertragen. Diese wiederum spreizen sich aufgrund ihrer Schrägstellung mit den Klemmkanten 23 in die Innenwand 34 der Aufnahme 32, so dass sie sich dort verkeilen und damit das Befestigungselement 1 in der Aufnahme 32 halten.

Wenn das Befestigungselement 1 aus der Aufnahme 32 entfernt werden soll, wird über das Anschlussteil 40 eine Drehbewegung auf das Befestigungselement ausgeübt. Diese wird über die Wandabschnitte 18 des Führungskörpers 10 auf die Federklammer 20 übertragen werden. Aufgrund der Ausrichtung der Klemmkanten 23 schräg ähnlich einem Gewindegang ergibt sich hieraus, dass die Klemmkanten 23 schräg in die Innenfläche 34 der Aufnahme 32 einschneiden und damit das Befestigungselement 1 aus der Aufnahme 32 "herausschrauben", also bei einer Drehung einen Hub erzeugen. Dieser führt letztendlich dazu, dass das Befestigungselement 1 vom Aufnahmeteil 30 demontiert wird.

Im beschriebenen Ausführungsbeispiel muss eine solche Drehbewegung entgegen dem Uhrzeigersinn erfolgen, um ein Herausdrehen entgegen der Einführungsrichtung des Führungskörpers 10 in die Aufnahme 32 zu erreichen. Sobald abhängig von der Montageposition der Klemmlaschen 22 und 24, der Gewindesteigung und dem Drehwinkel die Außenkanten 23 und 25 aus der Aufnahme 32 herausgeschraubt sind, lässt sich das gesamte Befestigungselement 1 - gegebenenfalls über einen kleinen Reibungswiderstand der Umfangsflächen 12 und 14 einerseits und der Innenfläche 34 andererseits - aus der Aufnahme 32 entnehmen. Dabei erfolgt, gegebenenfalls bis auf die für eine erneute Montage unschädlichen lokal eingeschnittenen Gewindegänge, keine Zerstörung der Innenfläche 34 der Aufnahme 32.

Aus Figur 3b ist insbesondere erkenntlich, wie die Umfangsflächen 12 und 14 an der Innenfläche 34 der Aufnahme 32 im montierten Zustand anliegen. Auch die nach oben formschlüssige Verbindung des U-förmigen Bereichs 26 der Federklammer 20 mit dem Führungskörpers 10 (an dessen Mittelsteg 17) ist hier zu erkennen.

Figur 4 zeigt eine weitere Baugruppe gemäß einer Ausführung der Erfindung mit einem geschlossenen Kabelbinder 42 in einer Draufsicht und einer in der Draufsicht eingezeichneten Schnittansicht B-B.

Der Kabelbinder 42 ist einstückig mit dem Anschlussteil 40 und dem Führungskörper 10 verbunden. Das Befestigungselement kann, wie in der Schnittansicht B-B durch die Pfeile um die Mittelachse und in der Darstellung nach rechts angedeutet, an dem Kabelbinder oder an - hier nicht eingezeichneten - Werkzeugangriffsflächen entgegen dem Uhrzeigersinn gedreht werden, wodurch das Befestigungselement 1 durch den Eingriff der Außenkanten 23 und 25 an der Innenfläche 34 der Aufnahme 32 aus dem Aufnahmeteil 30 herausgedreht wird.

Eine unbeabsichtigte Drehung des Befestigungselements 1 innerhalb der Aufnahme 32 ist im montierten Zustand durch die Bauteile verhindert, die im Kabelbinder 42 oder einen ähnlichen Montageteil aufgenommen sind, da diese für die Fixierung des Befestigungselements 1 in Umfangsrichtung sorgen.

## Patentansprüche

1. Befestigungselement (1) mit einem Führungskörper (10), der dazu dient, in einer Aufnahme (32) aufgenommen zu werden, und mit mindestens einer Klemmlasche (22, 24), die am Führungskörper (10) angeordnet ist und eine Außenkante (23, 25) aufweist, die dafür vorgesehen ist, mit der Innenfläche (34) der Aufnahme (32) zusammenzuwirken, wobei die Außenkante (23, 25) der Klemmlasche (22, 24) sich schräg zu einer Ebene erstreckt, die senkrecht auf der Mittelachse (M) des Führungskörpers (10) steht, wobei die Schrägstellung der Außenkante (23, 25) derart ist, dass die Klemmlasche (22, 24) eine Art Gewindewirkung erzeugt, mit der das Befestigungselement aus einer Aufnahme herausgeschraubt werden kann, **dadurch gekennzeichnet, dass** wenigstens eine, insbesondere zwei, Klemmlaschen (22, 24) Teil einer Federklammer (20) sind, die am Führungskörper (10) angebracht ist.

2. Befestigungselement (1) nach Anspruch 1, **dadurch gekennzeichnet, dass** zwei Klemmlaschen (22, 24) vorgesehen sind, die einander bezüglich des Führungskörpers (10) diametral gegenüberliegen.

3. Befestigungselement (1) nach Anspruch 1 oder Anspruch 2, **dadurch gekennzeichnet, dass** wenigstens eine, insbesondere jede, Klemmlasche (22, 24) eben ist und so schräg ausgerichtet ist, dass sich die Außenkante (23, 25) in Einschubrichtung am Führungskörper (10) hinten befindet.

4. Befestigungselement (1) nach Anspruch 1, **dadurch gekennzeichnet, dass** die Federklammer (20) U-förmig ausgeführt ist und je eine Klemmlasche (22, 24) an den freien Enden ihrer beiden Schenkel aufweist, wobei die Klemmlaschen (22, 24) schräg nach außen abstehen.

5. Befestigungselement (1) nach Anspruch 4, **dadurch gekennzeichnet, dass** die Federklammer (20) in einer Klammeraufnahme (16) angeordnet ist, die durch einen Mittelsteg (17) des Führungskörpers (10) und seitlich davon angeordnete Wandabschnitte (18) des Führungskörpers (10) begrenzt ist.

6. Befestigungselement (1) nach Anspruch 5, **dadurch gekennzeichnet, dass** die Klammeraufnahme (16) wenigstens eine Spreizfläche (19) aufweist, die mit der Federklammer (20) im Bereich der beiden Klemmlaschen (22, 24) zusammenwirken kann.

7. Befestigungselement (1) nach Anspruch 6, **dadurch gekennzeichnet, dass** der Übergang (28) zwischen den freien Enden der beiden Schenkel der Federklammer (20) und den Klemmlaschen (22, 24) nach innen eingezogen ausgeführt ist.

8. Befestigungselement (1) nach einem der vorhergehenden Ansprüche, **dadurch gekennzeichnet, dass** mit dem Führungskörper (10) ein Anschlusselement (40) verbunden ist, welches vorzugsweise einen Kabelbinder (42), einen Clipmechanismus und/oder einen Bracketmechanismus aufweist.

9. Baugruppe aus einem Befestigungselement (1) nach einem der vorhergehenden Ansprüche und einem Aufnahmeteil (30), das mit einer Aufnahme (32) versehen ist, in der der Führungskörper (10) des Befestigungselements (1) so angeordnet ist, dass die Außenkante (23, 25) der Klemmlasche (22, 24) an der Innenfläche (34) der Aufnahme (32) anliegt, so dass sich bei einer Drehung des Befestigungselements (1) relativ zur Aufnahme (32) eine Art Gewindewirkung ergibt, mit der das Befestigungselement (1) aus der Aufnahme (32) herausgeschraubt werden kann.

10. Baugruppe nach Anspruch 9, **dadurch gekennzeichnet, dass** das Material der Klemmlasche (22, 24) zumindest im Bereich der Außenkante (23, 25) härter ist als das Material der Innenfläche (34) der Aufnahme (32).

## Claims

1. Fastening element (1) having a guide body (10), which serves to be accommodated in a mount (32), and having at least one clamping lug (22, 24), which is arranged on the guide body (10) and has an outer edge (23, 25) provided for interacting with the inner surface (34) of the mount (32), wherein the outer edge (23, 25) of the clamping lug (22, 24) extends obliquely in relation to a plane which is perpendicular to the centre axis (M) of the guide body (10), wherein the oblique positioning of the outer edge (23, 25) is such that the clamping lug (22, 24) establishes a kind of thread effect by way of which the fastening element can be unscrewed from a mount, **characterized in that** at least one clamping lug is, in particular two clamping lugs (22, 24) are, part of a resilient clamp (20), which is fitted on the guide body (10).

2. Fastening element (1) according to Claim 1, **characterized by** the provision of two clamping lugs (22, 24), which are located diametrically opposite one another, as seen in relation to the guide body (10).

3. Fastening element (1) according to Claim 1 or Claim 2, **characterized in that** at least one, in particular each, clamping lug (22, 24) is planar and is oriented obliquely such that the outer edge (23, 25) is located at the rear of the guide body (10), as seen in the pushing-in direction.

4. Fastening element (1) according to Claim 1, **characterized in that** the resilient clamp (20) is of U-shaped configuration and has a respective clamping lug (22, 24) at the free ends of its two limbs, wherein the clamping lugs (22, 24) project obliquely outwards.

5. Fastening element (1) according to Claim 4, **characterized in that** the resilient clamp (20) is arranged in a clamp mount (16), which is delimited by a central crosspiece (17) of the guide body (10) and by wall portions (18) of the guide body (10), said wall portions being arranged to the sides of the central crosspiece.

6. Fastening element (1) according to Claim 5, **characterized in that** the clamp mount (16) has at least one spreading surface (19), which can interact with the resilient clamp (20) in the region of the two clamping lugs (22, 24).

7. Fastening element (1) according to Claim 6, **characterized in that** the transition (28) between the free ends of the two limbs of the resilient clamp (20) and the clamping lugs (22, 24) is configured in a drawn-in state.

8. Fastening element (1) according to one of the preceding claims, **characterized in that** a connection element (40) is connected to the guide body (10), said connection element having preferably a cable tie (42), a clip mechanism and/or a bracket mechanism.

9. Subassembly made up of a fastening element (1) according to one of the preceding claims and of an accommodating part (30) provided with a mount (32), in which the guide body (10) of the fastening element (1) is arranged such that the outer edge (23, 25) of the clamping lug (22, 24) butts against the inner surface (34) of the mount (32), and this therefore gives rise, when the fastening element (1) rotates relative to the mount (32), to a kind of thread effect by way of which the fastening element (1) can be unscrewed from the mount (32).

10. Subassembly according to Claim 9, **characterized in that** the material of the clamping lug (22, 24) is harder, at least in the region of the outer edge (23, 25), than the material of the inner surface (34) of the mount (32).

## Revendications

1. Elément de fixation (1) avec un corps de guidage (10), qui est destiné à être placé dans un logement (32), et avec au moins une patte de serrage (22, 24), qui est disposée sur le corps de guidage (10) et qui présente une arête extérieure (23, 25), qui est prévue pour coopérer avec la face intérieure (34) du logement (32), dans lequel l'arête extérieure (23, 25) de la patte de serrage (22, 24) s'étend en oblique par rapport à un plan, qui est perpendiculaire à l'axe central (M) du corps de guidage (10), dans lequel la position oblique de l'arête extérieure (23, 25) est telle que la patte de serrage (22, 24) produise une sorte d'effet de filet, avec lequel l'élément de fixation peut être dévissé hors d'un logement, **caractérisé en ce qu'**au moins une, de préférence deux, patte(s) de serrage (22, 24) fait/font partie d'une attache élastique (20), qui est posée sur le corps de guidage (10).

2. Elément de fixation (1) selon la revendication 1, **caractérisé en ce qu'**il est prévu deux pattes de serrage (22, 24), qui sont diamétralement opposées l'une à l'autre par rapport au corps de guidage (10).

3. Elément de fixation (1) selon la revendication 1 ou la revendication 2, **caractérisé en ce qu'**au moins une, en particulier chaque, patte de serrage (22, 24) est plane et est orientée en oblique, de telle manière que l'arête extérieure (23, 25) se trouve derrière dans la direction d'insertion sur le corps de guidage (10).

4. Elément de fixation (1) selon la revendication 1, **caractérisé en ce que** l'attache élastique (20) est réalisée en forme de U et présente chaque fois une patte de serrage (22, 24) aux extrémités libres de ses deux branches, dans lequel les pattes de serrage (22, 24) sont saillantes en oblique vers l'extérieur.

5. Elément de fixation (1) selon la revendication 4, **caractérisé en ce que** l'attache élastique (20) est disposée dans un logement d'attache (16), qui est limité par une nervure centrale (17) du corps de guidage (10) et par des parties de paroi (18) du corps de guidage (10) disposées latéralement à celle-ci.

6. Elément de fixation (1) selon la revendication 5, **caractérisé en ce que** le logement d'attache (16) présente au moins une face expansible (19), qui peut coopérer avec l'attache élastique (20) dans la région des deux pattes de serrage (22, 24).

7. Elément de fixation (1) selon la revendication 6, **caractérisé en ce que** la transition (28) entre les extrémités libres des deux branches de l'attache élastique (20) et les pattes de serrage (22, 24) est réalisée en retrait vers l'intérieur.

8. Elément de fixation (1) selon l'une quelconque des revendications précédentes, **caractérisé en ce qu'**un élément de raccord (40), qui présente de préférence un connecteur de câble (42), un mécanisme à clip et/ou un mécanisme à console, est assemblé au corps de guidage (10) .

9. Groupe composé d'un élément de fixation (1) selon l'une quelconque des revendications précédentes et d'une partie de réception (30), qui est dotée d'un logement (32) dans lequel le corps de guidage (10) de l'élément de fixation (1) est disposé de telle manière que l'arête extérieure (23, 25) de la patte de serrage (22, 24) s'applique sur la face intérieure (34) du logement (32), de telle manière que lors d'une rotation de l'élément de fixation (1) par rapport au logement (32) il se crée une sorte d'effet de filet, avec lequel l'élément de fixation (1) peut être dévissé hors du logement (32).

10. Groupe selon la revendication 9, **caractérisé en ce que** le matériau de la patte de serrage (22, 24) est au moins dans la région de l'arête extérieure (23, 25) plus dur que le matériau de la face intérieure (34) du logement (32) .
